# EUROPÄISCHE PATENTSCHRIFT

(11) **EP 1 752 753 B1**
(45) Veröffentlichungstag und Bekanntmachung des Hinweises auf die Patenterteilung: **08.09.2010**
(21) Anmeldenummer: 06118025.3
(22) Anmeldetag: 28.07.2006
(51) Int. Cl.: G01M 15/10

(54) **Verfahren zur Abgasmessung bei Verbrennungsmaschinen**
Exhaust gas measuring method for combustion engines
Procédé destiné à la mesure des gaz d'échappement dans des moteurs à combustion interne

(30) Priorität: 11.08.2005 AT 5502005 U
(43) Veröffentlichungstag der Anmeldung: 14.02.2007
(73) Patentinhaber: AVL List GmbH, 8020 Graz (AT)
(72) Erfinder: Simperl, Johann, 8051, Thal (AT); Erlach, Hans, 9125, Kühnsdorf (AT); Engeljehringer, Kurt, 8041, Graz (AT)
(74) Vertreter: Laminger, Norbert

(56) Entgegenhaltungen:
- US-A1- 2004 103 727

## Beschreibung

Die Erfindung betrifft ein Verfahren zur Abgasmessung bei Verbrennungsmaschinen unter Verwendung von CVS (Constant Volume Sampling)-Vollstromanlagen, wobei das Abgas der Verbrennungsmaschine mit Verbrennungsgas, vorzugsweise Luft, gemischt wird, und der Volums- oder Massenstrom des Verbrennungsgases durch die CVS-Vollstromanlage derart vorgegeben wird, dass er die maximal von der Verbrennungsmaschine benötigte Menge übersteigt, und wobei der Verbrennungsmaschine zu jedem Zeitpunkt eine im wesentlichen konstante, vollständig konditionierte Menge eines feuchte- und/oder temperaturkonditionierten Verbrennungsgases zugeführt wird, welche Menge zumindest gleich groß ist wie die maximal von der Verbrennungsmaschine benötigte Menge, sowie eine Vorrichtung zur Durchführung des Verfahrens.

Der Zustand der Ansaugluft beeinflusst in starkem Maße das Betriebsverhalten einer Verbrennungsmaschine. Da die Entwicklungsarbeiten von Verbrennungsmaschinen auf Grund der weltweit strenger werdenden Abgasgesetzgebung und der höheren Leistungsdichte immer höhere Anforderungen bezüglich der Reproduzierbarkeit und Genauigkeit der Versuchsergebnisse stellen, ist es daher erforderlich, sämtliche Einflüsse, welche die Versuchsergebnisse bei der Motorenentwicklung beeinflussen, so weit wie möglich zu eliminieren. Da zu diesen Einflüssen auch der Zustand der Ansaugluft zählt, ist es notwendig, diese zu konditionieren, um vergleichbare Versuchsbedingungen am Motorenprüfstand zu erreichen. Speziell für die Zertifizierung ist der Umgebungsluftdruck eine wichtige beeinflussende Größe, wobei Prüfanlagen auf ungünstiger geodätischer und klimatischer Lage bereits lange Zeit als Problemfälle bekannt sind.

Bekannte Systeme zur Konditionierung der Ansaugluft für Verbrennungsmaschinen sind am Markt käuflich verfügbar (z.B. "Combustion Air Conditioning Unit der Firma AVL-List GmbH, Graz/Österreich oder FEV AirCon der Firma FEV Motorentechnik GmbH, Aachen/Deutschland). Diese Systeme werden direkt an das Luftversorgungssystem der Verbrennungsmaschine angeschlossen, und müssen auf diese Weise bei Änderungen des Betriebszustandes der Verbrennungsmaschine und daraus folgenden Änderungen des Luftdurchsatzes direkt den Änderungen des Luftdurchsatzes der Verbrennungsmaschine folgen. Bei schnellen und dynamischen Änderungen des Luftdurchsatzes der Verbrennungsmaschine können bekannte Systeme, wie etwa auch in der DE 40 15 818 C2 beschrieben, diesen Änderungen nur eingeschränkt folgen, so dass während der dynamischen Luftdurchsatzänderungen nur eine schlechte Regelgüte der Luftzustände erreicht wird.

In der PCT/AT01/00371 sind eine Vorrichtung und ein Verfahren beschrieben, mittels welcher eine sichere, konstante Konditionierung der Verbrennungsluft auch unter dynamischen und hoch dynamischen Betriebsbedingungen gewährleistet werden kann, indem zu jedem Zeitpunkt eine im wesentlichen konstante, vollständig konditionierte Menge des Verbrennungsgases bereitgestellt wird, welche zumindest der von der jeweiligen Verbrennungsmaschine maximal benötigten Menge entspricht. Durch diese Maßnahme muss die Konditionierung nicht dynamisch nachgeführt werden, sondern der Motor am Prüfstand zweigt sich aus einer für die maximal nötige Menge an Verbrennungsluft die jeweils für den aktuellen Betriebszustand benötige Menge an Verbrennungsluft ab. Die vorgeschaltete Konditionierungsanlage muss ja ohnedies für die maximale Menge an Verbrennungsluft ausgelegt sein, wobei im erfindungsgemäßen Fall die Konditionierungsstrecke von einem konstanten Massenstrom passiert wird und daher die Regelung entsprechend einfach möglich ist.

Um sowohl mögliche Schwingungen des Gesamt-Regelsystems zu vermeiden als auch die Regeldynamik wesentlich zu erhöhen, so dass Sollwertänderungen mit möglichst geringen Auswirkungen auf das Gesamt-Regelsystem sehr schnell durchführbar sind, wurde gemäß einer Variante der AT 6824 U2 vorgeschlagen, dass der Volums- oder Massenstrom des Verbrennungsgases hinter der Verbrennungsmaschine eingestellt wird, wobei eine apparative Stellgröße als definierte Funktion des Umgebungsdruckes, des gewünschten Drucksollwertes und apparativer Eigenschaften bestimmt wird, und dass der aktuelle Drucksollwert vor der Verbrennungsmaschine aus dem aktuellen Wert der apparativen Stellgröße über eine definierte Funktion bestimmt und vor der Verbrennungsmaschine eingeregelt wird.

Nun werden jedoch Systeme benötigt, die bei erhöhter Regeldynamik ohne große Auswirkungen auf das Gesamt-Regelsystem zur Verwendung mit Constant Volume Sampling (CVS)-Vollstromanlagen geeignet sind und bei welchen eine Verdünnung der Motorabgase vor dieser CVS-Vollstromanlage vermieden werden muss. Die bislang zu diesem Zweck vorgeschlagenen Systeme mit schnellen Druckregelkreisen, die den Ansaugluftzustand annähernd konstant halten, arbeiten ohne Abgasgegendruck und bieten nicht die gewünschte Qualität der Regelung und Konditionierung.

Um ein derartiges System zu schaffen, ist ein Verfahren der eingangs angegebenen Art erfindungsgemäß derart abgewandelt, dass die Feuchte- und/oder Temperaturkonditionierung nach der Einregelung eines vorgebbaren Drucksollwertes für das Verbrennungsgas und auch nach der Aufteilung in einen Teilstrom zur CVS-Vollstromanlage und in einen Teilstrom zur Verbrennungsmaschine erfolgt. Durch diese Verbesserungen kann eine übergroße Auslegung der CVS-Anlagen vermieden werden, für welche auch keine Abgasverdünnung vor der CVS-Anlage befürchtet werden muss, und extra Verbrennungsluft-Konditioniersysteme für Zertifizierungsprüfstände sind nicht mehr erforderlich. Diese spezielle Variante hat den zusätzlichen Vorteil, dass kleinere, kostengünstige Konditionieranlagen verwendet werden können, da die Menge des Verbrennungsgases die maximal vom Motor benötige Menge um höchstens den Faktor 1,5 bis 2 übersteigen muss.

Gemäß einer vorteilhaften Ausführungsform der Erfindung ist vorgesehen, dass von der Verbrennungsmaschine nicht benötigte Verbrennungsluft nach der Feuchte- und/oder Temperaturkonditionierung an der Verbrennungsmaschine vorbei in den Mischbereich der CVS-Anlage geführt wird.

Eine weitere Steigerung der Exaktheit der Messwerte kann erzielt werden, wenn gemäß einem weiteren Ausführungsbeispiel der Erfindung alle normalerweise in die Umgebung offenen Öffnungen der Verbrennungsmaschine in die Druckregelung auf den vorgebbaren Drucksollwert für das Verbrennungsgas und die vollständige Konditionierung des Verbrennungsgases eingebunden werden.

Vorteilhafterweise wird auch noch alle Umgebungssensorik der Verbrennungsmaschine in die Druckregelung auf den vorgebbaren Drucksollwert für das Verbrennungsgas und die vollständige Konditionierung des Verbrennungsgases eingebunden.

Für Testaufgaben, die sich allein in Teillast-Bereichen der Verbrennungsmaschine bewegen, kann vorgesehen sein, dass die der Verbrennungsmaschine zugeführte Menge an feuchte- und/oder temperaturkonditioniertem Verbrennungsgas zumindest gleich groß ist wie die maximal von der Verbrennungsmaschine benötigte Menge für die maximale Betriebslast der Verbrennungsmaschine, so dass mit geringer dimensionierten oder auf Teillast betriebenen Konditionieranlagen das Auslangen gefunden werden kann. Derartige Anlagen können bevorzugt für meist in Teillast betriebene PKW-Motoren eingesetzt werden.

Um für alle möglichen Betriebszustände und Testaufgaben gerüstet zu sein, sieht eine Ausführungsform der Erfindung vor, dass die der Verbrennungsmaschine zugeführte Menge an feuchte- und/oder temperaturkonditioniertem Verbrennungsgas zumindest gleich groß ist wie die maximal von der Verbrennungsmaschine benötigte Menge für die maximal mögliche Last der Verbrennungsmaschine. Auch für die meist in Volllast betriebenen Nutzfahrzeug-Motoren ist diese Variante vorteilhaft.

Zur Lösung der eingangs gestellten Aufgabe ist eine Vorrichtung zur Durchführung des Verfahrens zur Abgasmessung bei Verbrennungsmaschinen unter Verwendung von CVS-Vollstromanlagen, wobei vor dem System aus Verbrennungsmaschine und CVS-Vollstromanlage zumindest eine einstellbare Druckregeleinrichtung vorgesehen ist, **dadurch gekennzeichnet, dass** hinter der Druckregeleinrichtung eine Versorgungsleitung zur Verbrennungsmaschine führt, von welcher eine Leitung zur CVS-Vollstromanlage abzweigt, wobei in der Versorgungsleitung eine Konditioniereinrichtung zur Feuchte- und/oder Temperaturkonditionierung des Verbrennungsgases vorgesehen ist, und hinter dieser Konditioniereinrichtung eine Verbindungsleitung zur CVS-Vollstromanlage abzweigt und vor dem Mischbereich in diese mündet.

Wenn Einrichtungen zur Versorgung aller normalerweise in die Umgebung offenen Öffnungen der Verbrennungsmaschine mit hinter der Konditioniereinrichtung entnommenem Verbrennungsgas vorgesehen sind, kann die gesamte Verbrennungsmaschine in die Druckregelung und Konditionierung eingebunden und damit die Genauigkeit der Abgasmessung weiter erhöht werden.

Die weitestgehende Steigerung der Aussagekraft der Abgasanalytik ist gegeben, wenn vorteilhafterweise Einrichtungen zur Versorgung aller Umgebungssensorik der Verbrennungsmaschine mit hinter der Konditioniereinrichtung entnommenem Verbrennungsgas vorgesehen sind.

Für hauptsächlich in Teillast gefahrene Abgasmessungen kann vorgesehen sein, dass die Konditioniereinrichtung für eine Menge an Verbrennungsgas ausgelegt ist, welche zumindest gleich groß ist wie die maximal von der Verbrennungsmaschine benötigte Menge für die maximale Betriebslast der Verbrennungsmaschine, so dass mit einer kleiner ausgelegten Konditioniereinrichtung das Auslangen gefunden werden kann.

Um für alle Betriebszustände Abgasmessungen durchführen zu können, kann vorteilhafterweise vorgesehen sein, dass die Konditioniereinrichtung für eine Menge an Verbrennungsgas ausgelegt ist, welche zumindest gleich groß ist wie die von der Verbrennungsmaschine benötigte Menge für die maximale mögliche Last.

In der nachfolgenden Beschreibung soll die Erfindung anhand der beigefügten Zeichnungsskizzen näher erläutert werden.

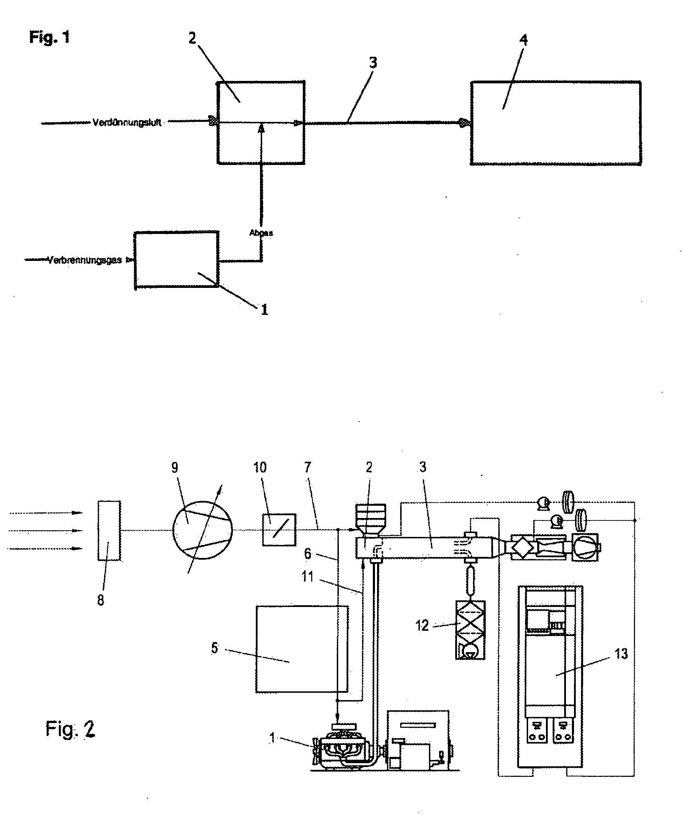

Dabei zeigt die Fig. 1 in schematischer Darstellung, wie Abgasmessungen unter Verwendung einer CVS-Vollstromanlage gemäß dem üblichen Stand der Technik durchgeführt werden, und Fig. 2 ist eine schematische Darstellung einer erfindungsgemäßen Vorrichtung zur Abgasanalyse von Verbrennungsmaschinen.

Gemäß dem in Fig. 1 dargestellten bekannten Verfahren wird einer Verbrennungsmaschine 1 ein Verbrennungsgas zugeführt und das Abgas der Verbrennungsmaschine 1, beispielsweise eines Otto- oder Dieselmotors, in den Mischbereich 2 der CVS-Vollstromanlage 2, 3 geführt. Dort wird es mit Verdünnungsluft gemischt und über eine Verbindungsleitung - für Ottomotoren - bzw. einen Verdünnungstunnel 3 - für Dieselmotoren - in die eigentliche CVS-Einheit geleitet.

Entsprechend der vorliegenden Erfindung und wie in Fig. 2 schematisch dargestellt wird die Wahl des gewünschten Druckes vor der Abzweigung der Verbrennungsluft von der Verdünnungsluft für die CVS-Anlage 2, 3 vorgenommen. Dabei wird Umgebungsluft über ein Filter 8 angesaugt und über ein Gebläse 9 sowie eine steuerbare Drosseleinrichtung 10 einer CVS-Vollstromanlage 2, 3 sowie einer Verbrennungsmaschine 1, hier speziell einem Dieselmotor, zugeführt. Hinter der Drosseleinrichtung 10 zweigt von der Leitung 7 für die Verdünnungsluft zum Verdünnungstunnel 3 der CVS-Anlage 2, 3 eine Versorgungsleitung 6 für die Versorgung der Verbrennungsmaschine 1 mit Verbrennungsluft ab.

Eine Konditionieranlage 5 zur Temperatur- und Feuchtekonditionierung hingegen ist erst zwischen dieser Abzweigung und der Verbrennungsmaschine 1 vorgesehen. Diese Konditionieranlage 5 muss nun in diesem Fall maximal auf 1,5 bis 2 Mal die maximale, von der Verbrennungsmaschine 1 benötigte Menge an Verbrennungsluft ausgelegt sein.

Von der Verbrennungsmaschine 1 nicht benötigte Verbrennungsluft wird über eine hinter der Konditionieranlage 5 abzweigende Verbindungsleitung 11 in den Mischbereich 2 der CVS-Anlage 2, 3 geführt, welcher Mischbereich 2 im vorliegenden Fall durch den Anfangsabschnitt des bei CVS-Anlagen für Dieselmotoren üblichen Verdünnungstunnels 3 gebildet ist. Damit wird dieser Anlage 2, 3 ein beträchtlicher Anteil vollständig druck-, feuchte- und/oder temperaturkonditionierter Verdünnungsluft mit genau den gleichen Eigenschaften zugeführt, wie sie für die Verbrennungsmaschine 1 vorliegen.

Im hinteren Abschnitt des Verdünnungstunnels 3 sind eine Probenahmeeinheit 12 für Partikel sowie die Analyseeinheit 13 für das Abgas angeschlossen. Am Ende des Verdünnungstunnels 3 sind schließlich die zugehörigen Einrichtungen zur Sicherstellung eines konstanten Volumenstromes an verdünntem Abgas dargestellt.

Vorteilhafterweise stehen alle in die Umgebung offenen Ein- und Ausgänge der Verbrennungsmaschine 1 mit der Versorgungsleitung 6 für das Verbrennungsgas und/oder mit der Abgasleitung in Verbindung. Damit ist eine vollständige Einbindung der gesamten Verbrennungsmaschine 1 in die Druck- als auch vorzugsweise Temperatur- und/oder Feuchtekonditionierung erreicht. Vorteilhafterweise ist auch sämtliche Umweltsensorik der Verbrennungsmaschine 1 derart in die Konditionierung eingebunden, um optimal aussagekräftige Abgasanalysen sicherzustellen.

## Patentansprüche

1. Verfahren zur Abgasmessung bei Verbrennungsmaschinen (1) unter Verwendung von CVS (Constant Volume Sampling)-Vollstromanlagen (2, 3), wobei das Abgas der Verbrennungsmaschine (1) mit Verbrennungsgas, vorzugsweise Luft, gemischt wird, und der Volums- oder Massenstrom des Verbrennungsgases durch die CVS-Vollstromanlage (2, 3) derart vorgegeben wird, dass er die maximal von der Verbrennungsmaschine (1) benötigte Menge übersteigt, und wobei der Verbrennungsmaschine (1) zu jedem Zeitpunkt eine im wesentlichen konstante, vollständig konditionierte Menge eines feuchte- und/oder temperaturkonditionierten Verbrennungsgases zugeführt wird, welche Menge zumindest gleich groß ist wie die maximal von der Verbrennungsmaschine (1) benötigte Menge, **dadurch gekennzeichnet, dass** die Feuchte- und/oder Temperaturkonditionierung (5) nach der Einregelung eines vorgebbaren Drucksollwertes für das Verbrennungsgas und auch nach der Aufteilung in einen Teilstrom zur CVS-Vollstromanlage (2, 3) und in einen Teilstrom zur Verbrennungsmaschine (1) erfolgt.

2. Verfahren nach Anspruch 1, **dadurch gekennzeichnet, dass** von der Verbrennungsmaschine (1) nicht benötigte Verbrennungsluft nach der Feuchte- und/oder Temperaturkonditionierung (5) an der Verbrennungsmaschine (1) vorbei in den Mischbereich (2) der CVS-Anlage (2, 3) geführt wird.

3. Verfahren nach einem der Ansprüche 1 oder 2, **dadurch gekennzeichnet, dass** alle normalerweise in die Umgebung offenen Öffnungen der Verbrennungsmaschine (1) in die Druckregelung auf den vorgebbaren Drucksollwert für das Verbrennungsgas und die vollständige Konditionierung des Verbrennungsgases eingebunden werden.

4. Verfahren nach einem der Ansprüche 1 bis 3, **dadurch gekennzeichnet, dass** alle Umgebungssensorik der Verbrennungsmaschine (1) in die Druckregelung auf den vorgebbaren Drucksollwert für das Verbrennungsgas und die vollständige Konditionierung des Verbrennungsgases eingebunden werden.

5. Verfahren nach einem der Ansprüche 1 bis 4, **dadurch gekennzeichnet, dass** die der Verbrennungsmaschine (1) zugeführte Menge an feuchte- und/oder temperaturkonditioniertem Verbrennungsgas zumindest gleich groß ist wie die maximal von der Verbrennungsmaschine benötigte Menge für die maximale Betriebslast der Verbrennungsmaschine.

6. Verfahren nach Anspruch 5, **dadurch gekennzeichnet, dass** die der Verbrennungsmaschine (1) zugeführte Menge an feuchte- und/oder temperaturkonditioniertem Verbrennungsgas zumindest gleich groß ist wie die maximal von der Verbrennungsmaschine (1) benötigte Menge für die maximal mögliche Last der Verbrennungsmaschine(1).

7. Vorrichtung zur Abgasmessung bei Verbrennungsmaschinen unter Verwendung von CVS (Constant Volume Sampling)-Vollstromanlagen, wobei vor dem System aus Verbrennungsmaschine (1) und CVS-Vollstromanlage (2, 3) zumindest eine einstellbare Druckregeleinrichtung (5, 9, 10) vorgesehen ist, **dadurch gekennzeichnet, dass** hinter der Druckregeleinrichtung (5; 9, 10) eine Versorgungsleitung (6) zur Verbrennungsmaschine (1) führt, von welcher eine Leitung zur CVS-Vollstromanlage (2, 3) abzweigt, wobei in der Versorgungsleitung (6) eine Konditioniereinrichtung (5) zur Feuchte- und/oder Temperaturkonditionierung des Verbrennungsgases vorgesehen ist, und hinter dieser Konditioniereinrichtung (5) eine Verbindungsleitung (11) zur CVS-Vollstromanlage (2, 3, 4) abzweigt und vor dem Mischbereich (2) in diese mündet.

8. Vorrichtung nach Anspruch 7, **dadurch gekennzeichnet, dass** Einrichtungen zur Versorgung aller normalerweise in die Umgebung offenen Öffnungen der Verbrennungsmaschine (1) mit hinter der Konditioniereinrichtung (5) entnommenem Verbrennungsgas vorgesehen sind.

9. Vorrichtung nach einem der Ansprüche 7 oder 8, **dadurch gekennzeichnet, dass** Einrichtungen zur Versorgung aller Umgebungssensorik der Verbrennungsmaschine (1) mit hinter der Konditioniereinrichtung (5) entnommenem Verbrennungsgas vorgesehen sind.

10. Vorrichtung nach einem der Ansprüche 7 bis 9, **dadurch gekennzeichnet, dass** die Konditioniereinrichtung (5) für eine Menge an Verbrennungsgas ausgelegt ist, welche zumindest gleich groß ist wie die maximal von der Verbrennungsmaschine (1) benötigte Menge für die maximale Betriebslast der Verbrennungsmaschine (1).

11. Vorrichtung nach Verfahren nach Anspruch 10, **dadurch gekennzeichnet, dass** die Konditioniereinrichtung (5) für eine Menge an Verbrennungsgas ausgelegt ist, welche zumindest gleich groß ist wie die von der Verbrennungsmaschine (1) benötigte Menge für die maximale mögliche Last.

## Claims

1. Method for measuring exhaust gas in internal combustion engines (1), using CVS (Constant Volume Sampling) full-flow systems (2, 3), wherein the exhaust gas of the internal combustion engine (1) is mixed with combustion gas, preferably air, and the volume stream or mass stream of the combustion gas is predetermined by the CVS full-flow system (2, 3), in such a manner that it exceeds the maximal amount required by the internal combustion engine (1), and wherein an essentially constant, completely conditioned amount of a moisture-conditioned and/or temperature-conditioned combustion gas is supplied to the internal combustion engine, which amount is at least as great as the amount maximally required by the internal combustion engine (1), **characterized in that** the moisture-conditioning and/or temperature-conditioning takes place after adjustment of a reference pressure value, which can be predetermined, for the combustion gas, and also after division into a partial flow to the CVS full-flow system (2, 3) and a partial flow to the internal combustion engine (1).

2. Method according to claim 1, **characterized in that** combustion air not needed by the internal combustion engine (1) is guided past the internal combustion engine (1) into the mixing region (2) of the CVS system (2, 3) after the moisture conditioning and/or temperature conditioning (5).

3. Method according to one of claims 1 or 2, **characterized in that** all the openings of the internal combustion engine (1) that are normally open to the surroundings are incorporated into the pressure regulation to the reference pressure value that can be predetermined, for the combustion gas, and for complete conditioning of the combustion gas.

4. Method according to one of claims 1 to 3, **characterized in that** all the surroundings sensors of the internal combustion engine (1) are incorporated into the pressure regulation to the reference pressure value that can be predetermined, for the combustion gas, and for complete conditioning of the combustion gas.

5. Method according to one of claims 1 to 4, **characterized in that** the amount of moisture-conditioned and/or temperature-conditioned combustion gas supplied to the internal combustion engine (1) is at least as great as the amount maximally required by the internal combustion engine for the maximal operating load of the internal combustion engine.

6. Method according to claim 5, **characterized in that** the amount of moisture-conditioned and/or temperature-conditioned combustion gas supplied to the internal combustion engine (1) is at least as great as the amount maximally required by the internal combustion engine (1) for the maximally possible load of the internal combustion engine (1).

7. Device for measuring exhaust gas in internal combustion engines, using CVS (Constant Volume Sampling) full-flow systems, wherein at least one adjustable pressure-regulation device (5, 9, 10) is provided ahead of the system of internal combustion engine (1) and CVS full-flow system (2, 3), **characterized in that** a supply line (6) leads to the internal combustion engine (1) behind the pressure-regulation device (5; 9, 10), from which line a line to the CVS full-flow system (2, 3) branches off, wherein a conditioning device (5) for moisture-conditioning and/or temperature-conditioning of the combustion gas is provided in the supply line (6), and a connecting line (11) to the CVS full-flow system (2, 3) branches off behind this conditioning device (5) and opens into this system ahead of the mixing region (2).

8. Device according to claim 7, **characterized in that** devices for supplying all the openings of the internal combustion engine (1) that are normally open to the surroundings with combustion gas derived from behind the conditioning device (5) are provided.

9. Device according to one of claims 7 or 8, **characterized in that** devices for supplying all the surroundings sensors of the internal combustion engine (1) with combustion gas derived from behind the conditioning device (5) are provided.

10. Device according to one of claims 7 to 9, **characterized in that** the conditioning device (5) is designed for an amount of combustion gas that is at least as great as the maximal amount required by the internal combustion engine (1) for the maximal operating load of the internal combustion engine (1).

11. Device according to claim 10, **characterized in that** the conditioning device (5) is designed for an amount of combustion gas that is at least as great as the amount required by the internal combustion engine (1) for the maximally possible load.

## Revendications

1. Procédé de mesure de gaz d'échappement près de moteurs à combustion interne (1) par utilisation d'installations à écoulement total-CVS (échantillonnage à volume constant) (2, 3), procédé dans lequel le gaz d'échappement du moteur à combustion interne (1) est mélangé avec du gaz de combustion, de préférence de l'air, et le débit volumique ou massique du gaz de combustion est prédéterminé par l'installation à écoulement total-CVS (2, 3) de telle sorte qu'il excède la quantité requise au maximum par le moteur à combustion interne (1), et dans lequel à chaque instant une quantité sensiblement constante, complètement conditionnée d'un gaz de combustion conditionné en humidité et/ou en température est introduit dans le moteur à combustion interne (1), laquelle quantité est au moins aussi grande que la quantité requise au maximum par le moteur à combustion interne (1), **caractérisé par le fait que** le conditionnement (5) en humidité et/ou en température a lieu après le réglage à une valeur de consigne de pression prédéterminable pour le gaz de combustion, et également après la séparation en un courant partiel vers l'installation à écoulement total-CVS (2, 3) et en un courant partiel vers le moteur à combustion interne (1).

2. Procédé selon la revendication 1, **caractérisé par le fait que** de l'air de combustion non requis par le moteur à combustion interne (1) est conduit à côté du moteur à combustion interne (1) dans la zone de mélange (2) de l'installation CVS (2,3), après le conditionnement (5) en humidité et/ou en température.

3. Procédé selon l'une des revendications 1 ou 2, **caractérisé par le fait que** tous les orifices du moteur à combustion interne (1), normalement ouverts dans l'environnement, sont intégrés dans la régulation de la pression à une valeur de consigne de pression prédéterminable pour le gaz de combustion et dans le conditionnement total du gaz de combustion.

4. Procédé selon l'une des revendications 1 à 3, **caractérisé par le fait que** tous les systèmes de capteurs d'environnement du moteur à combustion interne (1) sont intégrés dans la régulation de la pression à une valeur de consigne de pression prédéterminable pour le gaz de combustion et dans le conditionnement total du gaz de combustion.

5. Procédé selon l'une des revendications 1 à 4, **caractérisé par le fait que** la quantité de gaz de combustion conditionné en humidité et/ou en température introduite dans le moteur à combustion interne (1) est au moins aussi grande que la quantité requise au maximum par le moteur à combustion interne pour la charge d'utilisation maximale du moteur à combustion interne.

6. Procédé selon la revendication 5, **caractérisé par le fait que** la quantité de gaz de combustion conditionné en humidité et/ou en température introduite dans le moteur à combustion interne (1) est au moins aussi grande que la quantité requise au maximum par le moteur à combustion interne (1) pour la charge maximale possible du moteur à combustion interne (1).

7. Dispositif de mesure de gaz d'échappement près de moteurs à combustion interne par utilisation d'installations à écoulement total-CVS (échantillonnage à volume constant), dans lequel au moins un dispositif régulable de régulation de pression (5, 9, 10) est disposé avant le système composé du moteur à combustion interne (1) et de l'installation à écoulement total-CVS (2, 3), **caractérisé par le fait que**, derrière le dispositif de régulation de pression (5, 9, 10), une conduite d'alimentation (6) mène au moteur à combustion interne (1), à partir de laquelle une conduite bifurque vers l'installation à écoulement total-CVS (2, 3), un dispositif de conditionnement (5) étant disposé dans la conduite d'alimentation (6) pour conditionner en humidité et/ou en température le gaz de combustion, et derrière ce dispositif de conditionnement (5) une conduite de raccordement (11) bifurque vers l'installation à écoulement total-CVS (2, 3, 4) et débouche dans celle-ci avant la zone de mélange (2).

8. Dispositif selon la revendication 7, **caractérisé par le fait que** sont prévus des dispositifs pour alimenter toutes les ouvertures du moteur à combustion interne (1) normalement ouvertes dans l'environnement avec du gaz de combustion prélevé derrière le dispositif de conditionnement (5).

9. Dispositif selon l'une des revendications 7 ou 8, **caractérisé par le fait que** sont prévus des dispositifs pour alimenter tous les systèmes de capteurs d'environnement du moteur à combustion interne (1) avec du gaz de combustion prélevé derrière le dispositif de conditionnement (5).

10. Dispositif selon l'une des revendications 7 à 9, **caractérisé par le fait que** le dispositif de conditionnement (5) est conçu pour une quantité de gaz de combustion qui est au moins aussi grande que la quantité requise au maximum par le moteur à combustion interne (1) pour la charge d'utilisation maximale du moteur à combustion interne (1).

11. Dispositif pour la mise en oeuvre d'un procédé selon la revendication 10, **caractérisé par le fait que** le dispositif de conditionnement (5) est conçu pour une quantité de gaz de combustion qui est au moins aussi grande que la quantité requise par le moteur à combustion interne (1) pour la charge maximale possible.
